# EUROPÄISCHE PATENTANMELDUNG

(11) **EP 1 037 039 A2**
(43) Veröffentlichungstag der Anmeldung: **20.09.2000**
(21) Anmeldenummer: 00102597.2
(22) Anmeldetag: 08.02.2000
(51) Int. Cl.: G01N 27/407

(54) **Sensoranordnung für gasförmige Medien**

(30) Priorität: 16.03.1999 DE 19911516
(71) Anmelder: Heraeus Electro-Nite International N.V., 3530 Houthalen (BE)
(72) Erfinder: Kipka, Annette, Dr., 3001 Heverlee (BE)
(74) Vertreter: Kühn, Hans-Christian

(57) **Zusammenfassung**

Die Erfindung betrifft eine Sensoranordnung für gasförmige Medien mit mindestens einem Sensorelement, dessen elektrische Anschlüsse mit je einer Anschlußleitung verbunden sind, mindestens einer das Sensorelement und die elektrischen Anschlüsse umgebenden Schutzhülse und mindestens einem das Sensorelement in der Schutzhülse stützenden und gegen mechanische Stöße dämpfenden Drahtgebilde. Der Erfindung liegt die Aufgabe zugrunde, eine Sensoranordnung zu schaffen, bei welcher ein gas- und flüssigkeitsdichter Abschluß der elektrischen Anschlüsse gegenüber dem Meßgasraum zuverlässig gewährleistet wird. Die Aufgabe wird dadurch gelöst, daß das Drahtgebilde mindestens teilweise mit einer keramischen Vergußmasse getränkt ist und daß das Drahtgebilde mit der keramischen Vergußmasse den freien Querschnitt zwischen Sensorelement und Schutzhülse ausfüllt.

## Beschreibung

Die Erfindung betrifft eine Sensoranordnung für gasförmige Medien mit mindestens einem Sensorelement, dessen elektrische Anschlüsse mit je einer Anschlußleitung verbunden sind, mindestens einer das Sensorelement und die elektrischen Anschlüsse umgebenden Schutzhülse und mindestens einem das Sensorelement in der Schutzhülse stützenden und gegen mechanische Stöße dämpfenden Drahtgebilde.

In dieser Weise gestaltete Sensoranordnungen z. B. für Gas- oder Temperatursensoren, die im Abgas von Kraftfahrzeugen eingesetzt werden, sind aus WO95/18965 bekannt. Das zu messende Abgas wird dabei direkt an das Sensorelement herangeführt, um kurze Ansprechzeiten und hohe Empfindlichkeit zu erreichen. Dabei stellt der Bereich, in weichem sich die elektrischen Anschlüsse des Sensorelementes und die Anschlußleitungen befinden, eine Schwachstelle dar. Während des Betriebs einer derartigen Sensoranordnung können sich durch das zu messende Abgas in die Schutzhülse eingetragene Schmutzpartikel oder Flüssigkeiten zwischen den elektrischen Kontakten sammeln und eine leitfähige Verbindungen zwischen diesen herstellen. Dies kann zu einer störenden Beeinflussung des Meßsignals, bei stromdurchflossenen Anschlußleitungen zu anodischer Korrosion und schließlich zum Ausfall des Sensors führen. Die Anordnung von Drahtgebilden in der Schutzhülse zwischen dem Sensorelement und den elektrischen Anschlüssen zur Dämpfung von Stößen wirkt zwar filternd auf das Abgas, indem sehr grobe Schmutzpartikel abgefangen werden, es können aber dennoch feine Partikel wie z.B. Ruß und Feuchtigkeit eindringen und sich auf und zwischen den elektrischen Anschlüssen niederschlagen.

In DE 44 15 938 A1 wird ein kegelförmiges Keramikformteil mit einem Dichtelement verwendet, um einen gas- und feuchtigkeitsdichten Abschluß zu den elektrischen Anschlüssen zu erreichen. Diese in der Herstellung sehr aufwendige Ausführungsform nutzt einen Formschluß zwischen dem Keramikformteil und dem Metallgehäuse zur Abdichtung. Bei den ständig auftretenden Temperaturwechseln im Betrieb einer solchen Sensoranordnung im Abgas eines Kraftfahrzeuges können die unterschiedlichen Ausdehnungskoeffizienten des Metalls und der Keramik jedoch zu einer Lockerung und Undichtigkeiten führen, die wiederum eine Korrosion der elektrischen Anschlüsse zur Folge haben.

Aus DE 43 30 447 C2 ist die Verwendung einer Vergußmasse für einen Temperatursensor bekannt, bei dem ein Meßwiderstand und seine elektrischen Anschlüsse in einem Metallmantel mittels einer Vergußmasse eingegossen werden. Dabei schließt die Vergußmasse die Öffnung des Metallmantels gas- und flüssigkeitsdicht ab, um eine Korrosion des Meßwiderstandes und der elektrischen Anschlüsse zu verhindern.

Aus DE 38 12 178 A1 ist eine Vorrichtung zur Uberwachung eines einem Verschleiß unterworfenen Bauteils bekannt, bei welcher ein Sensor mit einer hochtemperaturbeständigen, elektrischen Leitung kontaktiert ist. Die Leitung ist als koaxiale Leitung ausgebildet, die einen Innenleiter, einer denselben umgebenden, hitzebeständigen Isolierung und einem über der Isolierung liegenden, als geschlossenes Rohr ausgeführten Außenleiter besteht. Alle Hohlräume innerhalb des Gehäuses des Sensors können mit einer Vergußmasse auf keramischer Basis gefüllt sein, so daß Feuchtigkeit nicht eindringen kann.

Die DE 197 14 203 A1 beschreibt ein temperaturbeständiges Dichtelement für das Sensorelement eines Gassensors, welches aus einer Mischung aus dem gut verformbaren hexagonalen Allotropen von Bomitrid und einer oxidkeramischen Komponente, vorzugsweise Steatit, besteht.

Die US 4,597,850 beschreibt einen Sauerstoffsensor zum Einsatz im Abgas eines Verbrennungsmotors mit einem Sensorelement und einem Sensorgehäuse. Eine gasdichte Abdichtung zwischen dem Sensorelement und dem Sensorgehäuse wird durch Aluminiumoxid-Pulver, Talkum-Pulver oder ein anorganisches Bindemittel erzeugt.

Aus DE 197 06 208 A1 ist eine Verbindungsvorrichtung zum feuchtigkeitsgeschützten, elektrischen Verbinden zweier mehradriger Leitungsenden bekannt. Dabei umgibt ein Hülsenelement die Leitungsenden im Bereich der Verbindung. Der Hohlraum zwischen dem Hülsenelement und den Leitungsenden ist mit einer aushärtbaren, wärmebeständigen und elektrisch isolierenden Dichtmasse ausgefüllt.

Der Erfindung liegt die Aufgabe zugrunde, eine Sensoranordnung zu schaffen, bei welcher ein gas- und flüssigkeitsdichter Abschluß der elektrischen Anschlüsse gegenüber dem Meßgasraum zuverlässig auch über lange Einsatzzeiten gewährleistet wird und deren Herstellung möglichst schnell, einfach und dadurch kostengünstig durchgeführt werden kann.

Die Aufgabe wird erfindungsgemäß dadurch gelöst, daß das Drahtgebilde mindestens teilweise mit einer keramischen Vergußmasse getränkt ist und daß das Drahtgebilde mit der keramischen Vergußmasse den freien Querschnitt zwischen Sensorelement und Schutzhülse ausfüllt. Das Drahtgebilde kann dabei ein in Form gepreßtes Metallgestrick ein Metallgewirk, eine Metallwolle oder ein ähnlich elastisch verformbares Gebilde sein. Die keramische Vergußmasse härtet idealerweise bei Raumtemperatur innerhalb weniger Minuten aus und es wird eine schnelle Weiterverarbeitung der Sensoranordnung ermöglicht. Während des Aushärtevorganges schrumpft die Vergußmasse idealerweise nicht oder kaum und bildet keine Risse. Die ausgehärtete Masse ist vorzugsweise bis etwa 1650°C temperaturbeständig, gas- und feuchtigkeitsdicht.

Der erfindungsgemäß gebildete "Verbundwerkstoff" aus dem Drahtgebilde und der ausgehärteten Vergußmasse vereint die positiven Eigenschaften der einzelnen Materialien in idealer Weise. Während die stoßdämpfende Wirkung des Drahtgebildes erhalten bleibt, bildet die ausgehärtete, keramische Vergußmasse eine Barriere auch für feinste Schmutzpartikel und Feuchtigkeit. Durch die Kombination des thermischen Ausdehnungskoeffizienten des Drahtgebildes mit dem thermischen Ausdehnungskoeffizienten der ausgehärteten Masse wird ein chemisch und mechanisch haltbarer Verbund zwischen dem Sensorelement und der Schutzhülse gebildet, der auch häufige Temperaturwechsel schadlos überdauert.

Weitere vorteilhafte Ausgestaltungen der Erfindung sind in den Anprüchen 2 bis 5 aufgeführt. So besteht die Möglichkeit, daß die keramische Vergußmasse auch die elektrischen Anschlüsse und Teile der Anschlußleitungen, die sich innerhalb der Schutzhülse befinden, direkt bedeckt. Dies ist zum einen durch gezielte Auftragung der Vergußmasse möglich, wobei zwischen den einzelnen elektrischen Anschlüssen keine Brücken aus der keramischen Vergußmasse gebildet werden. Es kann aber auch der gesamte freie Querschnitt zwischen der Schulzhülse und den elektrischen Anschlüssen mit der keramischen Vergußmasse aufgefüllt werden. Dies kann unter Zuhilfenahme von Trichtem oder anderen Gießhilfsmitteln geschehen. Dabei kann die Schutzhülse zwischen den elektrischen Anschlüssen und dem getränkten Drahtgebilde mit der keramischen Vergußmasse aufgefüllt sein. Die Füllhöhe der keramischen Vergußmasse in der Schutzhülse kann in dieser Variante also bis an das Drahtgebilde heranreichen. Grundsätzlich erschließen sich die Möglichkeiten, ein bereits getränktes Drahtgewebe einzusetzen oder aber ein vorerst ungetränktes Drahtgebilde zu verwenden und es dann von der Meßgasseite ausgehend mit der keramischen Vergußmasse zu bedecken und ganz oder teilweise zu tränken. Hier besteht zudem die Möglichkeit, das ungetränkte Drahtgebilde in die eingegossene keramische Vergußmasse zu drücken und es so von der Seite der elektrischen Anschlüsse ausgehend ganz oder teilweise mit ihr zu tränken. Eine weitere Ausführungsform wird dadurch gebildet, daß ein keramischer Formkörper in der Schutzhülse zwischen den elektrischen Anschlüssen und dem getränkten Drahtgebilde angeordnet ist. Dabei können die verbleibenden Spalten zwischen der Schutzhülle und dem Formkörper sowie zwischen dem Sensorelement und dem Formkörper mit Hilfe der keramischen Vergußmasse geschlossen werden. Der keramische Formkörper kann mit allen bereits genannten Ausführungsformen kombiniert werden und einer zusätzlichen Stabilisierung der Sensoranordung dienen.

Anhand der Figuren 1 bis 3 wird die Erfindung beispielhaft erläutert.
Fig. 1 Sensoranordnung mit getränktem Drahtgebilde
Fig. 2 Sensoranordnung mit teilweise getränktem Drahtgebilde
Fig. 3 Sensoranordnung mit keramischem Formkörper und getränktem Drahtgebilde

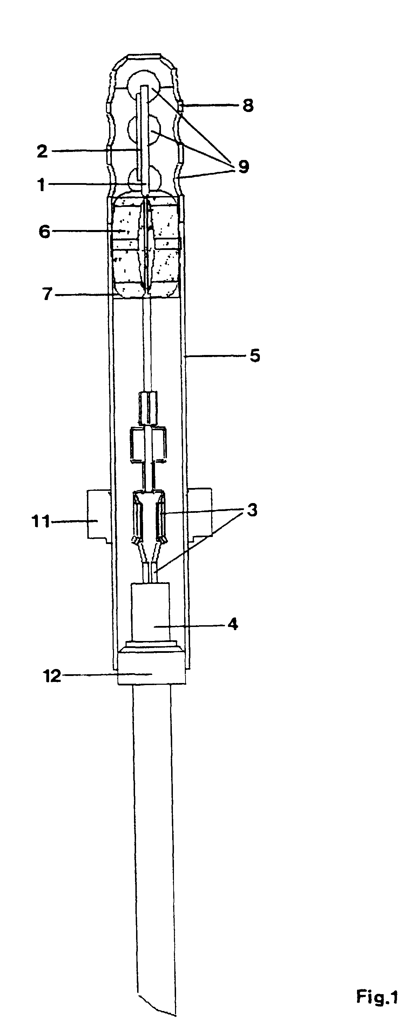

Die Fig. 1 zeigt eine mögliche Ausführungsform der Sensoranordnung, bei der ein Sensorelement 1 mit einer sensitiven Schicht 2 über die elektrischen Anschlüsse 3 mit einer mineralisolierten Anschlußleitung 4, nachfolgend MI-Leitung 4 genannt, verbunden ist. Die Schutzhülse 5 umgibt einen Teil der MI-Leitung 4, die elektrischen Anschlüsse 3, das Sensorelement 1 außer der sensitiven Schicht 2 und ein Drahtgebilde 6, das vollständig mit der keramischen Vergußmasse 7 getränkt ist. Dabei ist das mit der keramischen Vergußmasse 7 getränkte Drahtgebilde 6 zwischen den elektrischen Anschlüssen 3 und der sensitiven Schicht 2 um das Sensorelement 1 herum angeordnet und füllt den freien Querschnitt zwischen dem Sensorelement 1 und der Schutzhülse 5 aus. Zum Schutz des Sensorelementes 1 im Bereich der sensitiven Schicht 2 ist eine Schutzkappe 8 vorgesehen, die Gaseintrittsöffnungen 9 aufweist. Über die Anordnung eines die Schutzhülse 5 umschließenden Kragen 11 kann die Einbautiefe der Sensoranordnung variiert werden. Eine Buchse 12 bildet den Übergang zwischen MI-Leitung 4 und der Schutzhülse 5, wobei der Übergang gasdicht, beispielsweise durch Löten oder Schweißen, gestaltet ist.

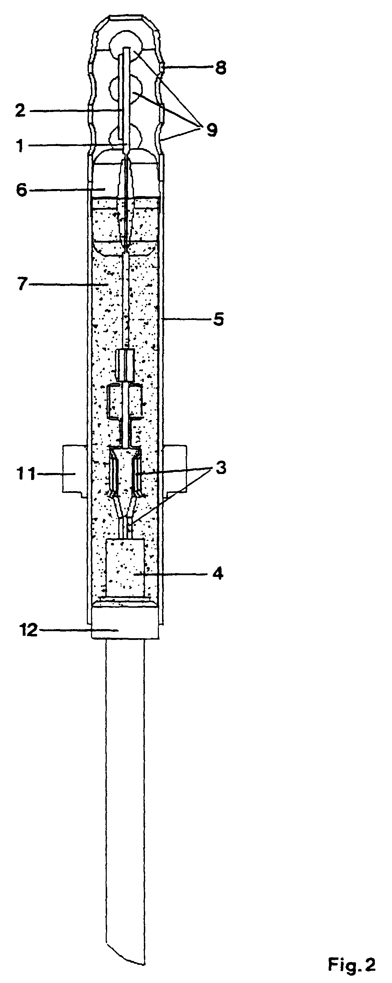

Die Fig. 2 zeigt eine wie in Fig. 1 beispielhaft beschriebene Sensoranordnung, jedoch füllt die keramische Vergußmasse 7 den freien Querschnitt zwischen den Teilen der MI-Leitung 4, die sich innerhalb der Schutzhülse 5 befinden, sowie zwischen den elektrischen Anschlüssen 3, Teilen des Sensorelementes 1 und der Schutzhülse 5 auf. Das Drahtgebilde 6 ist dabei nur teilweise auf der den elektrischen Anschlüssen 3 zugewandten Seite mit der keramischen Vergußmasse 7 getränkt.

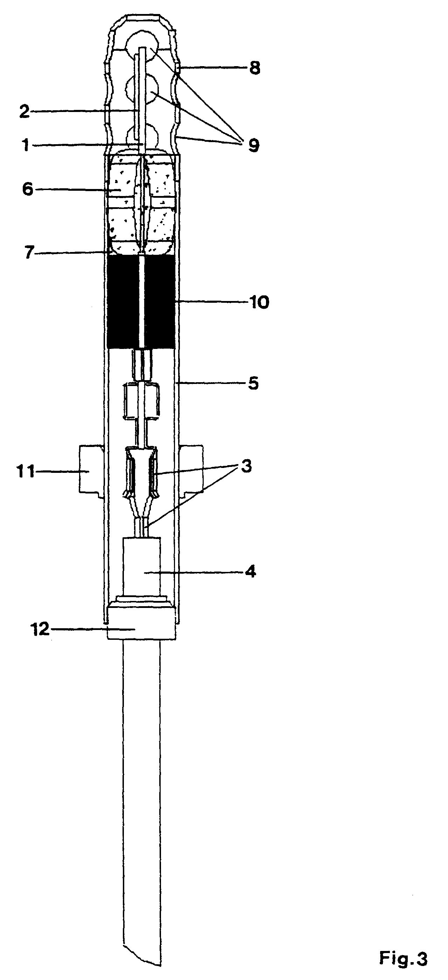

Die Fig. 3 zeigt die Sensoranordnung aus Fig. 1 ergänzt um einen keramischen Formkörper 10, der zwischen den elektrischen Anschlüssen 3 und dem mit keramischer Vergußmasse 7 getränkten Drahtgebilde 6 angeordnet ist. In diesem Beispiel ist der keramische Formkörper 10 auf das Sensorelement 1 aufgeschoben und füllt den freien Querschnitt zwischen dem Sensorelement 1 und der Schutzhülse 5 aus.

Die drei beispielhaft aufgeführten Figuren zeigen Sensoranordnungen, die vorzugsweise für Temperatur- oder Gassensoren verwendet werden können. Dabei werden für die Schutzhülse 5, die Schutzkappe 8, die Außenwandung der MI-Leitung 4, der Kragen 11, die Buchse 12 sowie das Drahtgebilde 6 bevorzugt metallische Materialien, beispielsweise temperaturbeständiger Stahl, verwendet. Für das Sensorelement 1 wird vorzugsweise ein inerter, nicht leitender Träger, beispielsweise Aluminiumoxid, verwendet. Die keramische Vergußmasse 7 kann als handelsübliches Produkt mit den gewünschten Eigenschaften bezogen werden. Sie wird üblicherweise erst kurz vor Gebrauch aus Pulverbestandteilen und einem flüssigen Binder hergestellt, wobei das Mischungsverhältnis so eingestellt wird, daß eine gießfähige Masse entsteht. Das Mischungsverhältnis ist dann geeignet, wenn die Vergußmasse bei Verwendung von Gießhilfsmitteln wie zum Beispiel Küvetten oder Trichtern gießfähig bleibt. Dabei darf es zu keiner Entmischung von Feststoff und Binder kommen. Besonders eignen sich hier keramische Vergußmassen 7 auf der Basis von Aluminiumoxid oder Magnesiumoxid, die einen Binder, z.B. auf silikatischer Basis, enthalten. Für die Verwendung einer keramischen Vergußmasse 7 für die in Fig. 1 bis Fig. 3 beispielhaft aufgeführten Sensoranordnungen sollte die Zusammensetzung der Masse so gewählt werden, daß sie im ausgehärteten Zustand idealerweise einen thermischen Ausdehnungskoeffizienten im Bereich von 3 x 10⁻⁶ bis 9 x 10⁻⁶ 1/K und eine hohe mechanische und thermische Stabilität aufweist. Außerdem sollte sie bei Raumtemperatur eine niedrige elektrische Leitfähigkeit, beispielsweise im Bereich von 10¹⁰ Ωcm, besitzen. Bei Temperaturen oberhalb 500°C kann dieser Wert jedoch abhängig von dem für die keramische Vergußmasse 7 verwendeten Material vermindert sein. Ausgehärtete Vergußmassen auf der Basis von Aluminiumoxid oder Magnesiumoxid sind chemisch sehr beständig, insbesondere gegenüber Cl⁻ - oder SO^{κ} -haltigen Säuren. Dies ist im Hinblick auf einen Einsatz der Sensoranordnung im Abgasstrom von Kraftfahrzeugen oder Verbrennungsanlagen besonders vorteilhaft.

## Patentansprüche

1. Sensoranordnung für gasförmige Medien mit mindestens einem Sensorelement , dessen elektrische Anschlüsse mit je einer Anschlußleitung verbunden sind, mindestens einer das Sensorelement und die elektrischen Anschlüsse umgebenden Schutzhülse und mindestens einem das Sensorelement in der Schutzhülse haltenden und gegen mechanische Stöße dämpfenden Drahtgebilde, dadurch gekennzeichnet, daß das Drahtgebilde (6) mindestens teilweise mit einer keramischen Vergußmasse (7) getränkt ist und daß das Draht-gebilde (6) mit der keramischen Vergußmasse (7) den freien Querschnitt zwischen Sensorelement (1) und Schutzhülse (5) ausfüllt.

2. Sensoranordung nach Anspruch 1, dadurch gekennzeichnet, daß die keramische Vergußmasse (7) auch die elektrischen Anschlüsse (3) und Teile der Anschlußleitungen (4) die sich innerhalb der Schutzhülse befinden, direkt bedeckt.

3. Sensoranordung nach einem der Ansprüche 1 bis 2, dadurch gekennzeichnet, daß der freie Querschnitt zwischen der Schutzhülse (5) und den elektrischen Anschlüssen (3) mit der keramischen Vergußmasse (7) ausgefüllt ist.

4. Sensoranordnung nach einem der Ansprüche 1 bis 3, dadurch gekennzeichnet, daß die Schutzhülse (5) zwischen den elektrischen Anschlüssen (3) und dem mit der keramischen Vergußmasse (7) getränkten Drahtgebilde (6) mit der keramische Vergußmasse (7) aufgefüllt ist.

5. Sensoranordnung nach einem der Ansprüche 1 bis 4, dadurch gekennzeichnet, daß ein keramischer Formkörper (10) in der Schutzhülse (5) zwischen den elektrischen Anschlüssen (3) und dem mit der keramischen Vergußmasse (7) getränkten Drahtgebilde (6) angeordnet ist.
